# EUROPEAN PATENT APPLICATION

(11) **EP 4 637 002 A1**
(43) Date of publication of application: **22.10.2025**
(21) Application number: 23903514.0
(22) Date of filing: 12.12.2023
(51) Int. Cl.: H02K 15/12, H02K 15/02, H02K 15/03

(54) **MOTOR CORE MANUFACTURING DEVICE, AND MOTOR CORE MANUFACTURING METHOD**

(30) Priority: 12.12.2022 JP 2022198169
(71) Applicant: NHK Spring Co., Ltd., Kanagawa 236-0004 (JP)
(72) Inventor: OHMORI, Makoto, Yokohama-shi, Kanagawa 236-0004 (JP); SATO, Kei, Yokohama-shi, Kanagawa 236-0004 (JP); FURUYA, Takumi, Yokohama-shi, Kanagawa 236-0004 (JP); KINOSHITA, Jun, Yokohama-shi, Kanagawa 236-0004 (JP)
(74) Representative: DREISS Patentanwälte PartG mbB
(86) International application number: PCT/JP2023/044478
(87) International publication number: WO 2024/128230

(57) **Abstract**

A motor core manufacturing device includes a mold that is configured to retain a motor core, the motor core including a plurality of resin fill sections arrayed in a ring shape at a predetermined interval; a ring-shaped chamber that is communicated with a resin fill passage formed in the mold, an end section of the resin fill passage being communicable with each of the plurality of resin fill sections, and the chamber being configured to accommodate therein a ring-shaped resin material having a prescribed thickness; a ring-shaped plunger that is movable within the ring-shaped chamber; and heaters including a first heater disposed in the mold and a second heater disposed at an outer periphery of the ring-shaped chamber.

## Description

### TECHNICAL FIELD

The present disclosure relates to a motor core manufacturing device and a motor core manufacturing method.

### BACKGROUND ART

In a motor core, for example, a rotor core, in a rotating electric machine, plural slots are arranged in an annular shape with prescribed intervals therebetween. Respective permanent magnets are attached inside the slots. As a method for attaching the permanent magnets to the motor core, a method of inserting the permanent magnets into the slots, then filling in around the permanent magnets with resin, and curing the resin is known.

Japanese Patent Application Laid-Open (JP-A) No. 2019-134566 recites, when filling in magnet insertion cavities of a rotor core with a resin that serves as a filler, charging the resin in tablet form into a filler supply part (sometimes referred to as a "pot"), heating the resin, softening and fusing the resin before the filling, and then conducting the filling.

### SUMMARY OF INVENTION

### TECHNICAL PROBLEM

When a motor core itself is large, such as when the motor core is to be used in a motor mounted at a vehicle or the like, the slots are larger, the number of slots is greater, a stacking height is greater, and so forth. Accordingly, a filling amount of resin is increased. When the filling amount of resin into the motor core is greater, the amount of resin material charged into the pot must be increased proportionally. Heating means for heating the resin material is generally disposed peripherally to the pot. When the resin material is in a tablet form (that is, a solid cylindrical shape) as in JP-A No. 2019-134566, large differences in distance from the heating means may result from the increase in the amount of resin material. Consequently, temperature differences are likely to occur, particularly between surface portions and middle portions of the resin material, and uniformly heating the whole of the resin material is difficult. Nonuniform heating of the resin material may lead to variations in the curing reaction of the resin material.

Further in JP-A No. 2019-134566, the pot that softens and fuses the tablet-form resin is formed in the middle of an upper mold. The magnet insertion cavities are provided at the outer periphery side of the rotor core. Therefore, distances between the pot and the magnet insertion cavities are large, and resin fill passages formed in the upper mold are long. When the resin fill passages are long, a duration required for filling is longer, and the curing reaction of the resin occurs in the resin fill passages. As a result, the magnet insertion cavities may not be sufficiently filled with the resin.

In consideration of the circumstances described above, the present disclosure provides a motor core manufacturing device and a motor core manufacturing method that may heat a resin material uniformly and enable shortening of resin fill passages.

### SOLUTION TO PROBLEM

A motor core manufacturing device according to a first aspect of the present disclosure includes: a mold that is capable of retaining a motor core, the motor core including plural resin fill sections provided in a ring shape with prescribed intervals therebetween; a ring-shaped chamber that is in communication with a resin fill passage formed in the mold, an end section of the resin fill passage being capable of communication with each of the plural resin fill sections, and the chamber being capable of accommodating a ring-shaped resin material with a prescribed thickness therein; a ring-shaped plunger that is capable of moving within the ring-shaped chamber; and heaters including a first heater disposed in the mold and a second heater disposed at an outside circumference of the ring-shaped chamber.

In the motor core manufacturing device as described above, because the resin material that is heated in the chamber is the ring-shaped resin material, there is no resin material in a middle region that is far from the second heater. Thus, the resin material in the chamber may be heated uniformly. Because the resin from the ring-shaped chamber fills the resin fill sections that are provided in a ring shape, resin fill passages linking the resin fill sections with the chamber may be shortened. A change in the kind of motor core that the resin is filling (for example, the core becoming larger or smaller, being the same diameter but resin filling positions being changed, and the like) may be adapted to, while keeping the resin fill passages short, by adjusting the diameter of the ring-shaped resin material. Because the resin material is ring-shaped, the resin material may be heated to a prescribed temperature in a shorter duration than when a tablet-form resin material is used.

In a motor core manufacturing device according to a second aspect of the present disclosure, in the motor core manufacturing device according to the first aspect of the present disclosure, the heaters further include a third heater disposed at an inside circumference of the ring-shaped chamber.

In the motor core manufacturing device as described above, an inner side region of the ring-shaped resin material may be heated assuredly. Therefore, uniform heating may be conducted assuredly.

In a motor core manufacturing device according to a third aspect of the present disclosure, in the motor core manufacturing device according to the first aspect or second aspect of the present disclosure, the ring-shaped chamber is capable of accommodating the ring-shaped resin material and a jig that accommodates the ring-shaped resin material therein.

In the motor core manufacturing device as described above, the ring-shaped resin material may be charged into the chamber without being separated from a jig that is used during molding of the ring-shaped resin material.

A motor core manufacturing method according to a fourth aspect of the present disclosure includes: charging a ring-shaped resin material with a prescribed thickness into a ring-shaped chamber; retaining a motor core including plural resin fill sections in a mold such that an end section of a resin fill passage is in communication with the plural resin fill sections, the resin fill passage being formed in the mold and being in communication with the ring-shaped chamber, and the plural resin fill sections being provided in a ring shape with prescribed intervals therebetween; heating and softening the ring-shaped resin material in the ring-shaped chamber; activating a ring-shaped plunger that is movable within the ring-shaped chamber for filling in the plurality of resin fill sections with a soft resin formed of the ring-shaped resin softened in the ring-shaped chamber; and curing the soft resin that has been filled into the plurality of resin fill sections.

In the motor core manufacturing method as described above, because the resin material that is heated in the chamber is the ring-shaped resin material, heat may be conducted uniformly to the whole of the resin material during the heating in the chamber. Because the resin from the ring-shaped chamber fills the resin fill sections that are provided in a ring shape, resin fill passages linking the resin fill sections with the chamber may be shortened, and the resin filling may be completed in a short duration. Moreover, the slot sections may be filled in with more of the resin material than in a conventional method. Because the resin material is ring shaped, the resin material may be heated to the prescribed temperature in a shorter duration than when a tablet-form resin material is used.

In a motor core manufacturing method according to a fifth aspect of the present disclosure, the motor core manufacturing method according to the fourth aspect of the present disclosure further includes pre-heating at least one of the mold and the motor core.

In the motor core manufacturing method as described above, consistent resin filling may be implemented without the resin cooling and increasing in viscosity when the resin softened in the chamber is reaching the mold interior and the motor core interior.

### ADVANTAGEOUS EFFECTS OF INVENTION

According to the motor core manufacturing device and motor core manufacturing method of the present disclosure, a resin material may be heated uniformly and resin fill passages may be shortened.

### BRIEF DESCRIPTION OF DRAWINGS

Fig. 1 is a schematic descriptive diagram showing an example of a motor core manufacturing device according to an exemplary embodiment of the present disclosure.
Fig. 2A is a schematic perspective view showing an example of a rotor core to be employed in the motor core manufacturing device shown in Fig. 1.
Fig. 2B is a schematic perspective view showing an example of a ring-shaped resin material to be employed in the motor core manufacturing device shown in Fig. 1.
Fig. 3 is a flowchart showing an example of a motor core manufacturing method according to the exemplary embodiment of the present disclosure.
Fig. 4 is an operation description diagram showing an example of an operation state of the motor core manufacturing device shown in Fig. 1.
Fig. 5 is an operation description diagram showing an example of another operation state of the motor core manufacturing device shown in Fig. 1.
Fig. 6 is an operation description diagram showing an example of another operation state of the motor core manufacturing device shown in Fig. 1.
Fig. 7 is an operation description diagram showing an example of yet another operation state of the motor core manufacturing device shown in Fig. 1.
Fig. 8 is a diagram showing a state, corresponding with Fig. 4, of a motor core manufacturing device according to a variant example of the motor core manufacturing device shown in Fig. 1.
Fig. 9 is a diagram showing a state, corresponding with Fig. 4, of a motor core manufacturing device according to another variant example of the motor core manufacturing device shown in Fig. 1.
Fig. 10 is a diagram showing a state in which a lower mold of the motor core manufacturing device shown in Fig. 9 is lowered.

### DETAILED DESCRIPTION

This application is based on Patent Application No. 2022-198169 filed in Japan on December 12, 2022, the contents of which form a part of the contents of this application.

The present disclosure will be more fully understood from the following detailed descriptions. Scope of application of the present application will become more apparent from the detailed descriptions below. However, the detailed descriptions and specific examples are preferred embodiments of the present disclosure and are described for the purpose of explanation only. From these detailed descriptions, numerous changes and modifications within the spirit and scope of the present disclosure will be apparent to those skilled in the art.

The applicants have no intention of dedicating any of the described embodiments to the public; all disclosed modifications and alternatives, including those that may not literally fall within the scope of the claims, are intended to be part of the invention under the doctrine of equivalents.

Below, exemplary embodiments for carrying out the present disclosure are described with reference to the drawings. A scope required for explanation to achieve the object of the present disclosure is illustrated in a schematic manner. Scopes required for explanation of the relevant parts of the present disclosure are principally explained, and parts for which explanations are omitted will be based on publicly known technology. The same or similar reference symbols are used for members that are the same or equivalent in the drawings, and duplicative descriptions are omitted. Where plural members that are the same as or equivalent to one another are included in one drawing, reference symbols may be attached to only some of those members to aid viewing of the drawings.

### - Motor core manufacturing device -

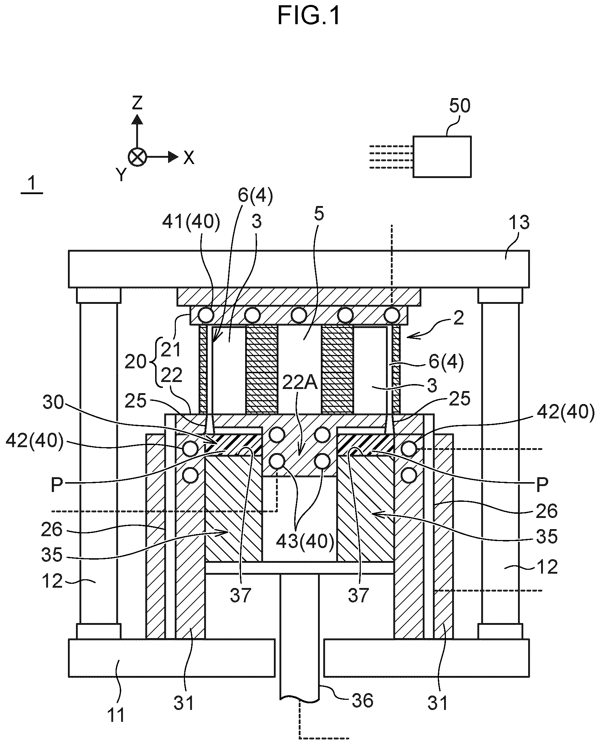

Fig. 1 is a schematic descriptive diagram showing an example of a motor core manufacturing device according to an exemplary embodiment of the present disclosure. A motor core manufacturing device 1 according to the present exemplary embodiment is a device for attaching permanent magnets 3 to slot sections 4 formed in a motor core, for example, an inner rotor-type rotor core 2. The attachment of the permanent magnets 3 is implemented by resin molding. The present exemplary embodiment illustrates the rotor core 2 as an example of a motor core, but the present disclosure is not limited thus. More specifically, the motor core manufacturing device 1 may be used for resin molding of, for example, a portion of a stator core serving as a motor core on which a coil is wound or the like, or for filling a penetrating hole provided in the axial direction of an unfastened stacked core or the like with resin in order to integrally fix the stacked core. To aid understanding, in the descriptions below the direction X indicated in Fig. 1 may be described as a left-and-right direction, the direction Y may be described as a front-and-rear direction, and the direction Z may be described as a height direction (or vertical direction).

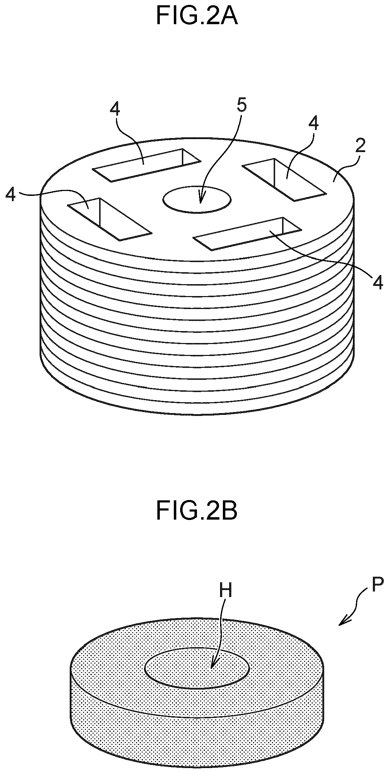

Fig. 2A and Fig. 2B are schematic perspective views showing examples of a rotor core and a ring-shaped resin material to be employed in the motor core manufacturing device shown in Fig. 1. As shown in Fig. 2A, the rotor core 2 may be structured as a substantially circular tube-shaped magnetic body made by stacking plural thin plates of electrical steel. A penetrating hole 5 is provided in an axial central portion of the rotor core 2. A shaft that constitutes a rotary shaft when the rotor core 2 is assembled to a motor is inserted into the penetrating hole 5. A plural number (four in Fig. 2A) of the slot sections 4 are provided in a ring shape so as to encircle the penetrating hole 5. The slot sections 4 extend in the axial direction of the rotor core 2. The slot sections 4 may be formed with shapes into which the permanent magnets 3 (see Fig. 1) can be inserted, for example, cuboid or circular arc-shaped penetrating cavities that penetrate in the thickness direction of the rotor core 2, but specific shapes are not particularly limited. Similarly, numbers of the permanent magnets 3 and slot sections 4 may be arbitrarily altered and may be greater than the four shown in Fig. 2A, for example, in the order of 10 to 40.

The permanent magnets 3 are inserted into the interiors of the slot sections 4 of the rotor core 2 and fixed. Each permanent magnet 3 may be structured as, for example, a cuboid body or a block body with a circular arc shape in plan view that is a little smaller than the slot section 4. Whether or not the permanent magnet 3 is magnetized at the time of insertion into the slot section 4 does not matter herein. Furthermore, whether or not the permanent magnet 3 is divided in the stacking direction or a direction orthogonal to the stacking direction does not matter herein. When the permanent magnet 3 is inserted into the slot section 4, at least partial gaps are formed between outer peripheral surfaces of the permanent magnet 3 and inner peripheral surfaces of the slot section 4. The gaps formed in the slot section 4 may function as fill gaps 6, which are an example of resin fill sections. The plural fill gaps 6 may respectively be in communication with end portions of resin fill passages 25 when the rotor core 2 is placed on a lower mold 22.

A ring-shaped resin material P to be used in the motor core manufacturing device 1 according to the present exemplary embodiment may be made principally of a thermosetting resin material. More precisely, a material principally containing a thermosetting resin material that is an epoxy resin, a phenol resin, an unsaturated polyester resin or a cyanate resin may be used for the ring-shaped resin material P. In addition to the thermosetting resin material, a curing agent, a filler and the like may be added to the ring-shaped resin material P.

As shown in Fig. 2B, the ring-shaped resin material P may be structured as a resin molded body formed in a ring shape with a prescribed thickness; an annular shape is preferable. In other words, the ring-shaped resin material P according to the present exemplary embodiment can be described as a resin molded body that is molded in a doughnut shape with a penetrating hole H in a central portion thereof. Specific dimensions and the like of the ring-shaped resin material P may be adjusted to suit shapes of a chamber 30 and the resin fill passages 25, which are described below, volumes of the fill gaps 6 and the like.

As shown in Fig. 1, the motor core manufacturing device 1 according to the present exemplary embodiment includes at least a mold 20 that is capable of retaining the rotor core 2, the ring-shaped chamber 30 that is capable of accommodating the ring-shaped resin material P, a ring-shaped plunger 35 that is movable within the chamber 30, and heaters 40 disposed at circumferences of the mold 20 and the chamber 30. The structural elements mentioned above may be accommodated in a manufacturing device body 10 or may be attached to suitable locations of the manufacturing device body 10.

The manufacturing device body 10 may include a platform 11, a plural number (for example, four) of pillars 12 provided standing from the surface of the platform 11, and a top plate 13 supported at distal end portions of the pillars 12. An upper mold 21 of the mold 20, which is described below, is fixed to a surface at the lower side of the top plate 13. An actuator, which is not shown in the drawings, may be used to raise and lower the top plate 13 in the vertical direction along with the pillars 12 and the upper mold 21. Raising and lowering operations of the top plate 13 are conducted principally when the rotor core 2 is being retained in the mold 20 and when the rotor core 2 is being removed and discharged from the mold 20.

The mold 20 is a member that retains the rotor core 2. More specifically, the mold 20 may include the upper mold 21 and the lower mold 22. The upper mold 21 abuts against and supports an upper portion of the rotor core 2, more precisely an upper face of the rotor core 2. The lower mold 22 abuts against and supports a lower portion of the rotor core 2, more precisely a lower face of the rotor core 2.

The resin fill passages 25 are provided in the interior of the lower mold 22. The resin fill passages 25 are for supplying softened resin to the plural fill gaps 6 in the rotor core 2 that is placed on the lower mold 22. Passage structure of the resin fill passages 25 may be altered to suit numbers and shapes of the fill gaps 6 in the rotor core 2, the shape of the chamber 30 and so forth. A structure that links the fill gaps 6 with the chamber 30 by the shortest distances is preferable.

The rotor core 2 whose slot sections 4 are to be filled with the resin may frequently be replaced with a rotor core 2 in another shape. Accordingly, plural lower molds 22 with different structures of the resin fill passages 25 may be prepared in advance and may be suitably exchanged and employed to suit each rotor core 2 retained in the mold 20. The lower mold 22 further includes a lifter 26 that enables raising and lowering of the lower mold 22, for charging of the ring-shaped resin material P into the chamber 30, cleaning of the resin fill passages 25 and so forth.

The upper mold 21 is movable in the vertical direction along with the top plate 13, as mentioned above. When the rotor core 2 has been placed on the lower mold 22, the rotor core 2 may be retained in the manner of being sandwiched between the upper mold 21 and the lower mold 22 by the upper mold 21 being lowered and pressing the upper face of the rotor core 2 with a prescribed pressure force. Shapes, materials and the like of surfaces of the upper mold 21 and lower mold 22 that abut against the rotor core 2 may be adjusted such that, when the fill gaps 6 are being filled with the resin, the filled resin does not leak out to the exterior of the rotor core 2. More specifically, the contacting surfaces may be adjusted so as to form a tightly sealed state when the rotor core 2 is sandwiched by the upper mold 21 and lower mold 22.

As mentioned above, the present exemplary embodiment employs a structure that moves the upper mold 21 vertically along with the top plate 13, but an alternative structure may be employed, provided that structure is capable of relatively altering the vertical direction positions of the upper mold 21 and lower mold 22. More specifically, for example, a structure may be employed that, instead of moving the upper mold 21 in the vertical direction, moves the lower mold 22 in the vertical direction or moves both the upper mold 21 and the lower mold 22 in the vertical direction.

In the present exemplary embodiment, an example is illustrated in which the slot sections 4 of the rotor core 2 have cuboid shapes that open in the vertical direction and have substantially no gaps in the front-and-rear direction and the left-and-right direction. Accordingly, the upper mold 21 and lower mold 22 that are employed have substantially flat abutting surfaces, but the shapes of abutting surfaces of the upper mold 21 and lower mold 22 may be altered as appropriate to match the shape of the rotor core 2 being retained. For example, when the motor core manufacturing device 1 according to the present exemplary embodiment is used for resin molding of an inner rotor-type stator core, the upper mold 21 and lower mold 22 that are employed may include protrusions to be inserted into a cavity formed in the center of the stator core.

The chamber (also referred to as a pot) 30 is formed as a ring-shaped cavity into which the ring-shaped resin material P that is to fill the fill gaps 6 can be charged. That is, the chamber 30 is structured by a ring-shaped cavity extending in the vertical direction that is formed in the interior of a support stand 31 provided on the platform 11. The chamber 30 is in communication with the resin fill passages 25 formed in the lower mold 22. The present exemplary embodiment illustrates an example in which the shape of the chamber 30 is formed as a cavity with an annular shape in plan view, but the shape of the chamber 30 may be altered as appropriate to suit the shape of the ring-shaped resin material P that is to be charged and the like.

The ring-shaped plunger 35 is a member that conveys resin in the chamber 30 formed by the ring-shaped cavity towards the resin fill passages 25. Thus, it is sufficient that at least a pressing face 37 disposed at an upper portion of the ring-shaped plunger 35 is formed in a ring shape, and the pressing face 37 may be provided so as to seal off a floor portion of the ring-shaped plunger 35. In this exemplary embodiment, the pressing face 37 functions as a floor face of the chamber 30. A raising and lowering arm 36 is attached to a face of the ring-shaped plunger 35 at the opposite side thereof from the side at which the pressing face 37 is provided. The raising and lowering arm 36 is coupled to an actuator that is not shown in the drawings. Actions of the actuator are transmitted to the ring-shaped plunger 35 via the raising and lowering arm 36, causing the pressing face 37 to be raised and lowered within the chamber 30. Sealing members (metal seals are preferable) may be provided at inner and outer peripheries of the distal end of the ring-shaped plunger 35, forming a structure that is more effective in preventing resin leakage.

The heaters 40 may be structured by widely known heaters or the like. The heaters 40 heat suitable locations within the manufacturing device body 10. The heaters 40 according to the present exemplary embodiment include at least a mold heater 41 and a chamber outer periphery heater 42. The mold heater 41, which is disposed inside the mold 20, is an example of a first heater. The chamber outer periphery heater 42, which is disposed at the outside circumference of the ring-shaped chamber 30, is an example of a second heater.

The mold heater 41 is disposed one or both of inside the upper mold 21 and inside the lower mold 22. The chamber outer periphery heater 42 is disposed at locations close to a wall surface at the outer side of the ring-shaped chamber 30, for example, so as to encircle the circumference of the chamber 30. Infrared heaters, sheath heaters and the like may be employed for the mold heater 41 and the chamber outer periphery heater 42, and for a chamber inner periphery heater 43 that is described below.

After the ring-shaped resin material P is charged into the chamber 30, when the chamber outer periphery heater 42 is activated, the chamber outer periphery heater 42 may heat the ring-shaped resin material P. In this exemplary embodiment, because the penetrating hole H is formed in the ring-shaped resin material P, all of the resin material is disposed at relatively small distances from the chamber outer periphery heater 42. Therefore, local temperature differences that are caused by differences in distances from a heat source (for example, the chamber outer periphery heater 42) when the ring-shaped resin material P in the chamber 30 is being heated and softened may be kept small.

In addition to the mold heater 41 and chamber outer periphery heater 42 mentioned above, the heaters 40 may include the chamber inner periphery heater 43 disposed at the inside circumference of the chamber 30, which is an example of a third heater. The chamber inner periphery heater 43 according to the present exemplary embodiment is an example that is provided at a pillar-shaped protrusion portion 22A. The protrusion portion 22A is formed at a central portion of the lower face of the lower mold 22 and forms a wall surface at the inner side of the chamber 30. The chamber inner periphery heater 43 provided at the protrusion portion 22A is disposed in the central region of the ring-shaped chamber 30, along the wall surface at the inner side of the chamber 30. Providing the chamber inner periphery heater 43 may supplement heating of inner side portions of the ring-shaped resin material P at positions that are relatively further from the chamber outer periphery heater 42. As a result, uniform heating may be conducted more assuredly. The heaters 40 according to the present exemplary embodiment are not limited to the various heaters mentioned above. For example, a separate heater may be provided at a location near to the pressing face 37 of the ring-shaped plunger 35.

As described above, the present exemplary embodiment illustrates an example in which the chamber inner periphery heater 43 serving as an example of the third heater is provided at the protrusion portion 22A that is formed at the lower mold 22, but a structure related to the chamber inner periphery heater 43 is not limited thus. More specifically, for example, a pillar-shaped member may extend toward the central region of the ring-shaped chamber 30 from a region of the platform 11 that opposes the ring-shaped chamber 30, or from another structural element in a vicinity peripheral to that region (for example, the support stand 31), and the chamber inner periphery heater 43 may be provided at this pillar-shaped member instead of the protrusion portion 22A. A diameter of the pillar-shaped member may be adjusted such that a peripheral surface of a distal end portion of the pillar-shaped member forms an inner peripheral surface of the ring-shaped chamber 30. The shape of this pillar-shaped member is designed so as not to limit operations of the ring-shaped plunger 35.

The motor core manufacturing device 1 according to the present exemplary embodiment further includes a control device 50 for controlling the structural elements described above. The control device 50 is equipment that is electronically connected to the structural elements described above and is capable of conducting arbitrary manufacturing steps by controlling operations of the structural elements. The control device 50 may, for example, be connected to the structural elements to be capable of communications by wired or wireless communications, as depicted by the dotted lines in Fig. 1. The 50 may be realized using a sequencer (a programmable logic controller (PLC)), a widely known computer or the like. The control device 50 may be constituted by just one of these computers and such or by a plural combination of the same.

By operating the structural elements described above, the control device 50 may implement a motor core manufacturing method according to the present exemplary embodiment, which is described below. Accordingly, the motor core manufacturing method according to the present exemplary embodiment may be provided to a computer constituting the control device 50 in the form of a program of software or the like that contains commands for conducting prescribed operations, or in the form of a non-transitory recording medium storing the program, or in the form of an application program provided via a network or the like. Details of the motor core manufacturing method according to the present exemplary embodiment are described below.

In the motor core manufacturing device 1 provided with the structures described above, it is particularly noteworthy that the plural fill gaps 6 of the rotor core 2 to be filled with resin are provided in a ring shape with prescribed intervals, and that the chamber 30 is in a ring shape. When the outer diameter of the chamber 30 approximately matches the arrangement of the fill gaps 6 as in the present exemplary embodiment, lengths of the resin fill passages 25 linking the chamber 30 with the fill gaps 6 are shorter than in, for example, a conventional structure in which a chamber is disposed in the middle of a device. Therefore, according to the motor core manufacturing device 1 according to the present exemplary embodiment, a duration required for the resin to pass through the resin fill passages 25 may be made shorter than in a conventional structure, and the slot sections 4 may be filled in with more of the resin material than in a conventional method.

As described above, according to the motor core manufacturing device 1 according to the present exemplary embodiment, because the chamber 30 and the resin material (P) charged into the chamber 30 both have ring shapes, temperature differences are less likely to occur during heating of the resin material, and the resin material may be uniformly heated. Because temperature differences during the heating of the resin that is heated and softened in the chamber 30 are suppressed, the curing reaction may occur uniformly. Consequently, clogging of the resin fill passages 25, a loss of fluidity or the like caused by the curing reaction occurring in an unintended manner may be suppressed.

Because the shape of the chamber 30 is the ring shape matching the arrangement of the fill gaps 6, the lengths of the resin fill passages 25 may be shortened and progression of the curing reaction of the resin in the resin fill passages 25 may be suppressed. As a result, the slot sections 4 may be thoroughly filled in with the resin.

Accordingly, the outer diameter and inner diameter of the chamber 30 are specified with consideration for the arrangement of the fill gaps 6. Preferably, the outer diameter and inner diameter of the chamber are adjusted so as to shorten the distances between the chamber 30 and the fill gaps 6 as much as possible. The shorter the distances between the chamber 30 and the fill gaps 6, the shorter the resin fill passages 25 linking the chamber 30 with the fill gaps 6 may be.

Now, the motor core manufacturing method according to the present exemplary embodiment is described. In the descriptions of the motor core manufacturing method below, an example is described in which the motor core manufacturing device 1 described above is used to manufacture the rotor core 2. However, the motor core manufacturing method may be implemented using a device other than the motor core manufacturing device 1.

### - Motor core manufacturing method -

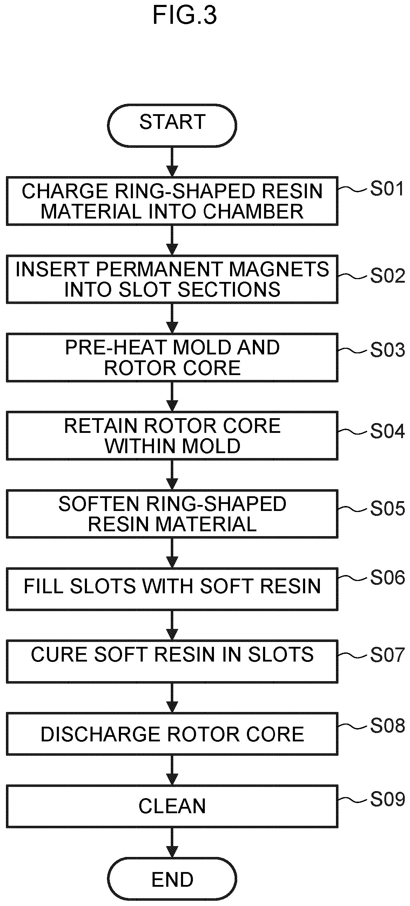

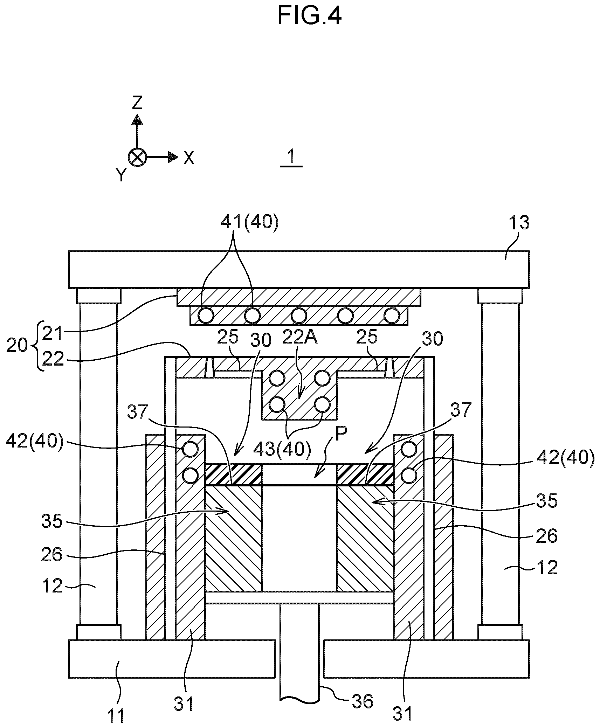

Fig. 3 is a flowchart showing an example of a manufacturing process conducted with the motor core manufacturing device shown in Fig. 1. Fig. 4 to Fig. 7 are operation description diagrams showing examples of operation states of the motor core manufacturing device shown in Fig. 1. The motor core manufacturing method according to the present exemplary embodiment is described below principally with reference to Fig. 3 to Fig. 7. To aid viewing of Fig. 4 to Fig. 7, some members with little relationship to this series of operations and the associated reference symbols are omitted from the drawings in Fig. 4 to Fig. 7.

Firstly in the motor core manufacturing method according to the present exemplary embodiment, as shown in Fig. 4, the lifter 26 is activated and raises the lower mold 22, and the ring-shaped resin material P is charged into the chamber 30 that is exposed as a result (step S01). The ring-shaped resin material P charged into the chamber 30 is placed on the pressing face 37 of the ring-shaped plunger 35. The size of the ring-shaped resin material P that is charged into the chamber 30 may be adjusted in consideration of sizes of the resin fill passages 25 and of the fill gaps 6 of the rotor core 2 that is to be retained subsequently.

Performing pre-heating of the chamber 30 before step S01 is preferable. Pre-heating of the chamber 30 may be conducted by, for example, activating one or both of the chamber outer periphery heater 42 and the chamber inner periphery heater 43.

The permanent magnets 3 and the rotor core 2 to which the permanent magnets 3 are to be attached are prepared before or after the ring-shaped resin material P is charged into the chamber 30, or at the same time as the ring-shaped resin material P is charged, and the permanent magnets 3 are inserted into the slot sections 4 of the rotor core 2 (step S02). The mold 20 and the rotor core 2 are pre-heated (step S03). The pre-heating of the mold 20 may be conducted using, for example, the mold heater 41. The pre-heating of the rotor core 2 may be performed separately from the pre-heating of the mold 20, using publicly known heating means that is not shown in the drawings or the like. If the mold heater 41 is activated in the state in which the rotor core 2 is placed on the lower mold 22, the pre-heating of the rotor core 2 may be carried out simultaneously with the pre-heating of the mold 20. When the mold 20 and the rotor core 2 are pre-heated simultaneously, step S04, which is described below, may be conducted before step S03. Pre-heating temperatures of the mold 20 and the rotor core 2 may be, for example, in the order of 100°C to 180°C. The pre-heating may be carried out on just one or other of the mold 20 and the rotor core 2.

The order of step S02 and step S03 may be altered, in which case the permanent magnets 3 are inserted into the slot sections 4 of the rotor core 2 after the pre-heating of the rotor core 2 and the mold 20 (the permanent magnets 3 are pre-heated separately or are not pre-heated).

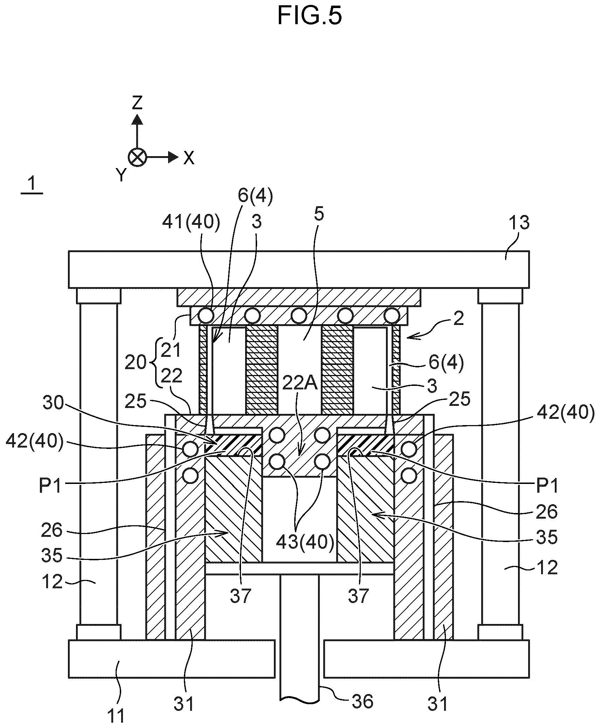

When the pre-heating of the mold 20 and the rotor core 2 is completed, as shown in Fig. 5, the lifter 26 is activated and lowers the lower mold 22, after which the rotor core 2 is placed on the lower mold 22. Then the upper mold 21 is moved in the lower direction and the rotor core 2 is retained within the mold 20 (step S04). The upper mold 21 is regulated so as to press the upper face of the rotor core 2 with a prescribed pressure force. As a result, the upper mold 21 makes area contact with the upper face of the rotor core 2 and the lower mold 22 makes area contact with the lower face of the rotor core 2.

At a suitable timing after the above-mentioned step S01, the chamber outer periphery heater 42 and the chamber inner periphery heater 43 are activated and heat the ring-shaped resin material P (step S05). The interior of the chamber 30 is heated in order to lower the viscosity of the ring-shaped resin material P and form a softened resin (below referred to as "the soft resin") P1. The chamber outer periphery heater 42 and chamber inner periphery heater 43 that are used for this heating are preferably controlled so as to prevent local heat differences in the ring-shaped resin material P. By this heating, the ring-shaped resin material P may be fused and lowered in viscosity, and changed to the soft resin P1 with high fluidity.

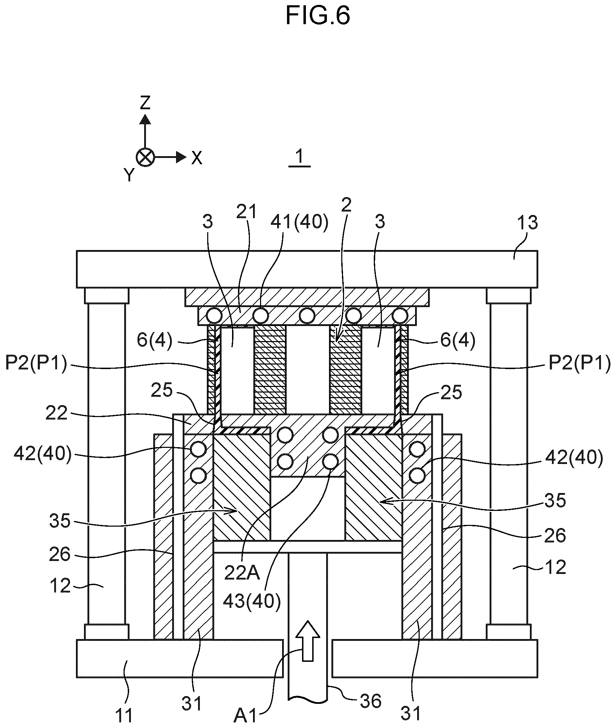

The ring-shaped resin material P changes to the soft resin P1 and then, as shown in Fig. 6, the fill gaps 6 in the slot sections 4 are filled in with the soft resin P1 by the ring-shaped plunger 35 being raised in the direction of arrow A1 and pushing up the soft resin P1 (step S06). The soft resin P1 that is pushed up by the pressing face 37 of the ring-shaped plunger 35 passes through the resin fill passages 25 from the chamber 30 and flows into the fill gaps 6. For the filling of the fill gaps 6 with the soft resin P1 in step S06 to be conducted smoothly, for example, air holes (not shown in the drawings) for releasing air in the fill gaps 6 may be provided at suitable locations of the upper mold 21.

When the filling of the fill gaps 6 with the soft resin P1 is completed, the mold heater 41 is activated and heats the soft resin P1 in the fill gaps 6 to a higher temperature than the heating in step S05, as a result of which the soft resin P1 is cured (step S07). When curing the soft resin P1, the mold heater 41 heats the soft resin P1 several times to a temperature range in which the viscosity of the soft resin P1 is greatly increased. The soft resin P1 is changed to cured resin P2 by this heating. Thus, the permanent magnets 3 are fixed in the slot sections 4 of the rotor core 2 by resin molding. A heating duration in step S07 may be suitably adjusted to suit the type of resin being used in the ring-shaped resin material P and the like.

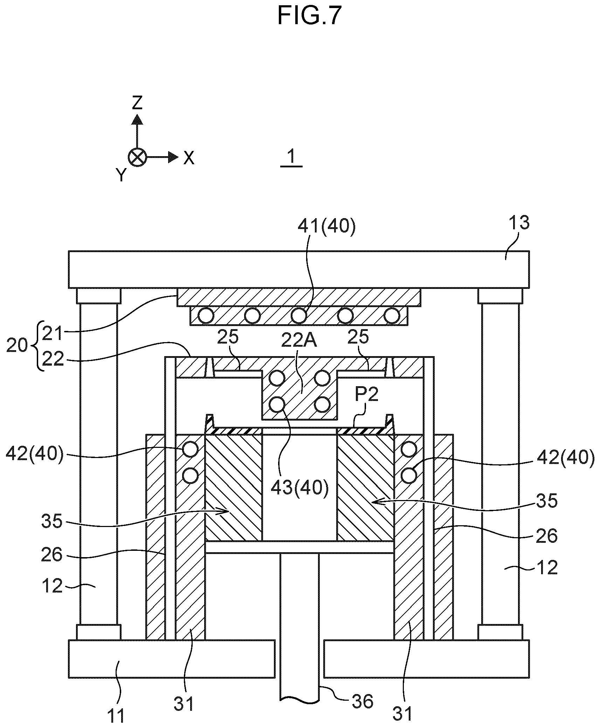

When the resin molding process sequence described above is completed, the upper mold 21 is raised and conveying means that is not shown in the drawings, such as a robot arm or the like, is used to discharge the resin-molded rotor core 2 out of the device (step S08). The discharged rotor core 2 may be fed to a separate device for, for example, attachment of a shaft and the like. When the discharge of the rotor core 2 is completed, the motor core manufacturing device 1 is cleaned (step S09). The cleaning of the motor core manufacturing device 1 includes, as illustrated in Fig. 7, activating the lifter 26 and removing cured resin P2 from inside the resin fill passages 25. The cleaning may also include using a cleaning member such as a brush or the like to clean surfaces of the mold 20, the interior of the chamber 30 and so forth.

As described above, according to the motor core manufacturing method according to the present exemplary embodiment, because the chamber 30 and the ring-shaped resin material P charged into the chamber 30 are both ring-shaped, temperature differences are less likely to arise during the heating of the resin in the chamber 30, and the resin may be heated uniformly. Because the shape of the chamber 30 matches the arrangement of the fill gaps 6, the lengths of the resin fill passages 25 linking the chamber 30 with the fill gaps 6 may be shortened, progression of the curing reaction of the resin in the resin fill passages 25 may be suppressed, and the slot sections may be filled in with a more of the resin material than in a conventional method.

According to the motor core manufacturing device and motor core manufacturing method according to the present exemplary embodiment, the shape of the ring-shaped resin material P enables heating to a prescribed temperature in a shorter duration than for a conventional tablet-shaped resin material. Pre-heating of the ring-shaped resin material P may be carried out before the ring-shaped resin material P is charged into the chamber 30. However, because uniform heating in a short duration is possible within the chamber 30, the ring-shaped resin material P may be charged into the chamber 30 without pre-heating. Even when pre-heating is carried out, the shape of the ring-shaped resin material P enables uniform pre-heating in a short duration, similarly to the heating within the chamber 30.

In the exemplary embodiment described above, a mode is illustrated in which the resin fill passages 25 are provided in the lower mold 22 and the fill gaps 6 are filled with the soft resin P1 from below. However, the filling direction is not limited thus. For example, a mode is applicable in which the resin fill passages are provided in the upper mold 21 instead of the lower mold 22 and are filled with the softened resin from above. A mode is also applicable in which the resin fill passages are provided in both the lower mold 22 and the upper mold 21 and are filled with the resin from both below and above.

The exemplary embodiment described above illustrates a mode in which only the ring-shaped resin material P is charged into the chamber 30. However, the motor core manufacturing device and motor core manufacturing method of the present disclosure may encompass modes other than the mode in which the ring-shaped resin material P is charged as a single body. Accordingly, as a variant example of the exemplary embodiment described above, a motor core manufacturing device 1A is described below. The motor core manufacturing device 1A includes a chamber 30A into which, in addition to the ring-shaped resin material P, a jig 60 can be charged. The ring-shaped resin material P is accommodated inside the jig 60.

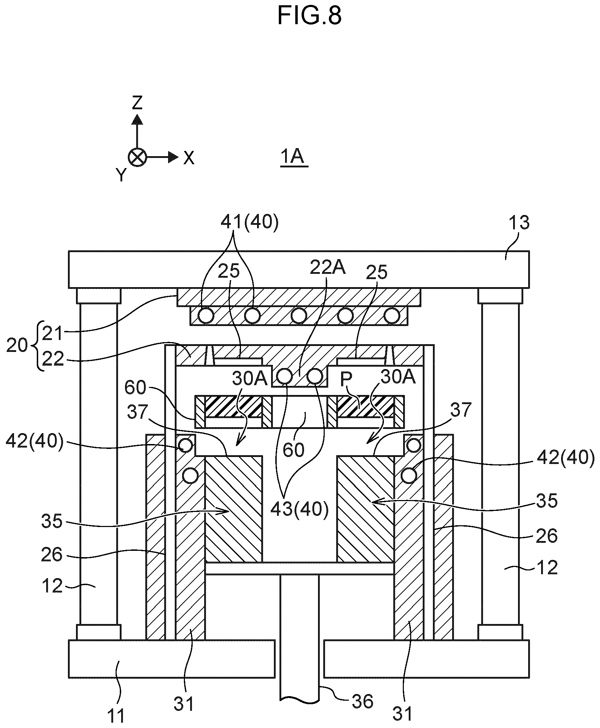

Fig. 8 is a diagram showing a state, corresponding with Fig. 4, of the motor core manufacturing device according to the variant example of the motor core manufacturing device shown in Fig. 1. The motor core manufacturing device 1A according to the present variant example has similar structures to the motor core manufacturing device 1 according to the exemplary embodiment described above, apart from structures in the region of the chamber 30A. Accordingly, the descriptions below focus on structures that differ from the motor core manufacturing device 1 described above. Structural elements that are the same as in the motor core manufacturing device 1 are assigned the same reference symbols and are not described here.

In the motor core manufacturing device 1A according to the present variant example, as shown in Fig. 8, an outside diameter of the chamber 30A is adjusted to be greater than the chamber 30 of the motor core manufacturing device 1 described above. The ring-shaped resin material P and the jig 60, in which the ring-shaped resin material P is accommodated, can be accommodated in the ring-shaped chamber 30A with the larger outside diameter.

The jig 60 is, for example, a member that is attached to the ring-shaped resin material P so as to surround the outside circumference and the inside circumference of the ring-shaped resin material P. The jig 60 may be, for example, part of a mold that is used when molding the ring-shaped resin material P. The jig 60 is preferably made of a material with good heat conductivity, for example, a metal, so as not to block heat from the chamber outer periphery heater 42 and the chamber inner periphery heater 43, which are provided at the circumferences of the chamber 30A. In addition to the structure described above, the jig 60 encompasses a structure that surrounds only the outside circumference or the inside circumference of the ring-shaped resin material P.

Thus, when a structure is employed in which the ring-shaped resin material P attached to the jig 60 can be charged into the chamber 30A without being separated ("mold release") from the jig 60, a manufacturing process sequence that includes a process of molding the ring-shaped resin material P may be simplified.

In the exemplary embodiment described above, when the ring-shaped resin material P is being charged into the chamber 30, the lower mold 22 is raised. As a result, the central region of the chamber 30 temporarily forms a cavity. Therefore, for example, when the outer diameter of the ring-shaped resin material P is smaller than the outer diameter of the chamber 30 or the like, a portion at the inner peripheral side of the ring-shaped resin material P charged into the chamber 30 may be disposed in this cavity. If a portion of the ring-shaped resin material P is disposed in the region of this cavity when the lower mold 22 is being lowered, this portion of the ring-shaped resin material P may make contact with the protrusion portion 22A and impede operation of the lower mold 22, and the inner peripheral side of the ring-shaped resin material P may be damaged. Accordingly, as another variant example of the exemplary embodiment described above, a motor core manufacturing device 1B is described below in which the above-mentioned cavity is not formed when the ring-shaped resin material P is being charged into the chamber 30.

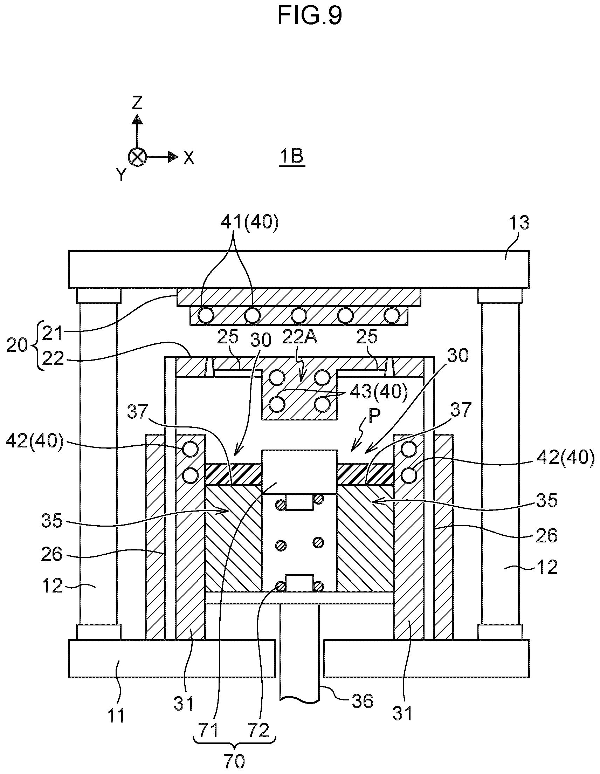

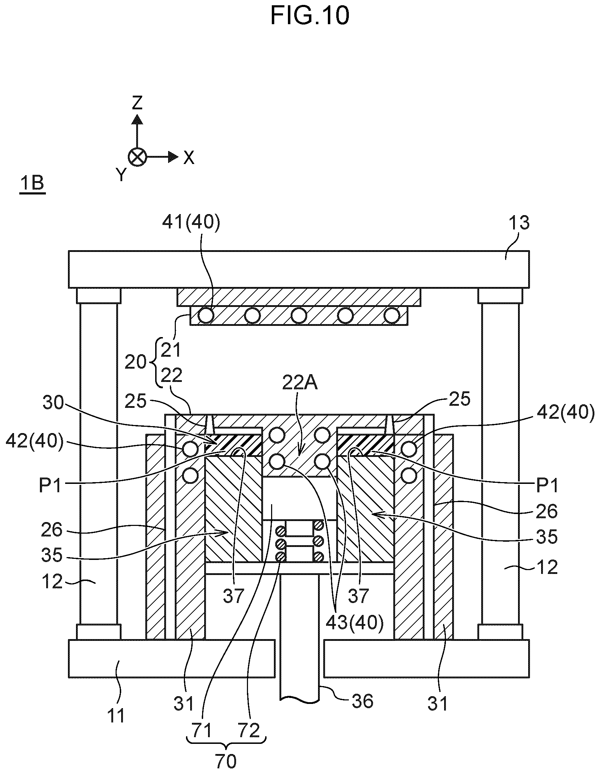

Fig. 9 is a diagram showing a state, corresponding with Fig. 4, of the motor core manufacturing device according to the another variant example of the motor core manufacturing device shown in Fig. 1. Fig. 10 is a diagram showing a state in which the lower mold of the motor core manufacturing device shown in Fig. 9 is lowered. As shown in Fig. 9 and Fig. 10, the motor core manufacturing device 1B according to the present variant example includes a guide member 70 at a central region of the chamber 30. The guide member 70 enables temporary positioning of the inner peripheral surface of the ring-shaped resin material P charged into the chamber 30. The motor core manufacturing device 1B according to the present exemplary embodiment has similar structures to the motor core manufacturing device 1 described above, apart from including the guide member 70.

The guide member 70 may be structured by a coil spring 72 and a block body 71. One end of the coil spring 72 is supported at the center of a base portion of the ring-shaped plunger 35 and the coil spring 72 extends in the upper direction. The block body 71 is attached to the other end of the coil spring 72 and closes off the central region of the chamber 30. The coil spring 72 may be replaced with urging means having the same function.

The block body 71 may be structured by a member with a cylindrical shape that is substantially equal in diameter to the protrusion portion 22A of the lower mold 22. When the lower mold 22 is raised as shown in Fig. 9, the block body 71 is pushed upward by the urging force of the coil spring 72 and is disposed so as to close off the central region of the chamber 30. At this time, an upper face of the block body 71 may be disposed at a higher position than the pressing face 37 of the ring-shaped plunger 35. When the ring-shaped resin material P is charged into the chamber 30 whose central region is closed off by the block body 71, the ring-shaped resin material P is disposed in the chamber 30 in a state in which positions of the inner peripheral surface of the ring-shaped resin material P are positioned by the block body 71.

When the charging of the ring-shaped resin material P into the chamber 30 is completed and then the lower mold 22 is lowered, the block body 71 is pushed by the protrusion portion 22A of the lower mold 22 and is lowered in opposition to the urging force of the coil spring 72. At this time, because the diameter of the block body 71 and the diameter of the protrusion portion 22A are adjusted so as to be substantially equal as mentioned above, the operation of inserting the protrusion portion 22A to the inner peripheral side of the ring-shaped resin material P may be conducted smoothly. The structure may be formed such that the upper face of the block body 71 is moved downward further than the pressing face 37 when the lowering of the lower mold 22 is complete, as shown in Fig. 10.

When the guide member 70 is provided as described above in the motor core manufacturing device 1B according to the present variant example, the protrusion portion 22A and the ring-shaped resin material P do not come into contact when the lower mold 22 is being lowered. Thus, the operation of lowering the lower mold 22 may be carried out smoothly without damaging the ring-shaped resin material P. To facilitate the charging of the ring-shaped resin material P, a bevel or curve may be machined at the outer circumference of the upper face of the block body 71, or the upper face may be formed in a tapering shape.

The present disclosure is not limited by the exemplary embodiment described above and numerous modifications may be embodied within a scope not departing from the gist of the present disclosure. All these modifications are to be encompassed by the technical idea of the present disclosure. In the present disclosure, there may be only one of each structural element and there may be two or more, provided no conflicts result.

All references cited in this specification, including publications, patent applications, and patents, are herein incorporated by reference to the same extent as if each reference was individually and specifically indicated to be incorporated by reference and the contents of each reference were fully set forth herein.

The use of nouns and similar designations in connection with the descriptions of this disclosure (particularly in connection with the claims below) shall be construed to cover both the singular and the plural, unless otherwise indicated herein or clearly contradicted by context. The terms "comprises", "has", "includes" and "contains" shall be construed as open-ended terms (meaning "including but not limited to"), unless otherwise indicated. The recitation of numerical ranges herein is intended merely to serve as a shorthand method for individually referring to each value falling within the range, unless otherwise indicated herein, and each value is incorporated into the specification as if it were individually recited herein. All methods described herein may be performed in any suitable order, unless otherwise indicated herein or clearly contradicted by context. Any examples or exemplary language used herein (for example, "such as"), unless otherwise asserted, are intended merely to better illustrate the disclosure and do not apply limitations to the scope of the disclosure. No language in the Description should be construed as indicating any non-claimed element as essential to the practice of the disclosure.

Preferred embodiments of the disclosure are described in this Description, including the best mode known to the inventors for carrying out the disclosure. Variations of these preferred embodiments will become apparent to those skilled in the art upon reading the above descriptions. The inventors expect that skilled practitioners will apply such variations as appropriate, and intend that the disclosure will be embodied otherwise than as specifically described herein. Accordingly, this disclosure includes all modifications and equivalents of the subject matter recited in the claims appended hereto as permitted by applicable law. Moreover, the disclosure encompasses any combination of the above-described elements in all variations thereof unless otherwise indicated in this Description or clearly contradicted by context.

## Claims

1. A motor core manufacturing device, comprising:
a mold that is configured to retain a motor core, the motor core including a plurality of resin fill sections arrayed in a ring shape at a predetermined interval;
a ring-shaped chamber that is communicated with a resin fill passage formed in the mold, an end section of the resin fill passage being communicable with each of the plurality of resin fill sections, and the chamber being configured to accommodate therein a ring-shaped resin material having a prescribed thickness;
a ring-shaped plunger that is movable within the ring-shaped chamber; and
heaters including a first heater disposed in the mold and a second heater disposed at an outer periphery of the ring-shaped chamber.

2. The motor core manufacturing device according to claim 1, wherein the heaters further include a third heater disposed at an inner periphery of the ring-shaped chamber.

3. The motor core manufacturing device according to claim 1, wherein the ring-shaped chamber is configured to accommodate the ring-shaped resin material and a jig that accommodates therein the ring-shaped resin material.

4. A motor core manufacturing method, comprising:
charging a ring-shaped resin material having a prescribed thickness into a ring-shaped chamber;
retaining a motor core including a plurality of resin fill sections in a mold such that an end section of a resin fill passage is communicated with the plurality of resin fill sections, the resin fill passage being formed in the mold and being communicated with the ring-shaped chamber, and the plurality of resin fill sections being arrayed in a ring shape at a predetermined interval;
heating and softening the ring-shaped resin material in the ring-shaped chamber;
activating a ring-shaped plunger that is movable within the ring-shaped chamber for filling in the plurality of resin fill sections with a soft resin formed of the ring-shaped resin material softened in the ring-shaped chamber; and
curing the soft resin that has been filled into the plurality of resin fill sections.

5. The motor core manufacturing method according to claim 4, further comprising pre-heating at least one of the mold or the motor core.
